# EUROPEAN PATENT SPECIFICATION

(11) **EP 0 753 557 B1**
(45) Date of publication and mention of the grant of the patent: **15.04.1998**
(21) Application number: 95870085.8
(22) Date of filing: 13.07.1995
(51) Int. Cl.: C09K 3/30, C11D 17/00

(54) **Packaged foaming composition**
Verpackte schäumende Zusammensetzung
Compositions moussante emballée

(43) Date of publication of application: 15.01.1997
(73) Proprietor: THE PROCTER & GAMBLE COMPANY, Cincinnati, Ohio 45202 (US)
(72) Inventor: Wevers, Jean (NMN), B-1840 Steenhuffel (BE)
(74) Representative: Canonici, Jean-Jacques

(56) References cited:
- EP-A- 0 586 295
- EP-A- 0 677 577
- DATABASE WPI Week 8906 Derwent Publications Ltd., London, GB; AN 89-042692 & JP-A-63 314 299 (PEGION KK) , 22 December 1988

## Description

The present invention relates to a packaged product comprising a foaming composition and a propellant gas packaged within a container. In particular the packaged product is a foam dispensing aerosol container.

The process of cleaning and conditioning textile fabrics has been carried out by various means for many centuries. Recently many improvements and refinements have been made to give more efficient processes for cleaning and conditioning textile fabrics. Modern-day processes basically involve a system to deliver active cleaning or conditioning materials to the fibre surface.

US-A 4 242 377, issued on December 30th 1980, describes foaming compositions which are used for fabric conditioning and which are suitably dispensed from aerosol containers. The conditioning step is generally intended to be carried out on fabrics that have already been cleaned. Anionic surfactants are disclosed which may act as conditioning agents and/or foaming agents. Example 6 describes a foaming composition comprising 17.8% sodium soap (by weight, excluding propellant).

EP-A-0 677577 published on 18^{th} October 1995 which is prior art under Article 54(3) EPC, discloses a foaming detergent composition for cleaning textile fabrics which may be dispensed with the aid of propellants including hydrofluorocarbons (HFCs) or low molecular weight hydrocarbons.

It is well known in the aerosol industry that there is a need to move out HFC propellants on account of their environmental profile. The replacement choice has mostly been the low molecular weight hydrocarbons such as propane, butane, pentane, hexane, but these are flammable gases which may not always be suitable for use inside confined appliances with potential ignition sources. For these reasons, the industry is seeking a move to more environmentally friendly chemicals.

The object of the present invention is to provide a concentrated foaming detergent composition, packaged in a container and free of HFCs and low molecular weight hydrocarbon propellants.

### Summary of the Invention

The present invention is concerned with packaged product comprising a foaming detergent composition; a propellant gas; and a container having a dispensing means; the foaming detergent composition and the propellant gas being packaged inside the container. The dispensing means, which is typically a valve, can be activated so that the propellant gas forces the detergent active material out of the sealed container. At the same time the propellant gas expands to form a myriad of gas bubbles in a foam. The objects of the invention, namely to achieve excellent cleaning performance with an environmentally friendly propellant gas, are provided by the foaming detergent composition which comprises at least 18% by weight of a surfactant system, the surfactant system consisting essentially of anionic surfactant and, optionally, nonionic surfactant, and the propellant gas consisting essentially of carbon dioxide.

A further object of the invention is to provide a low water composition suitable for maintaining enzymes in a stable state. In particular the compositions of the present invention are suitable for use with detergent enzymes.

Preferably the viscosity of the foaming detergent composition, measured at 20°C and 1 atmosphere, using a Brookfield viscometer, Spindle No.2 at 60rpm, is less than 700 mPa.s and preferably less than 500 mPa.s. Viscosity control may be achieved by the addition of viscosity reducing, organic solvents, such as those selected from the group consisting of polyethylene glycol, short chain alcohol ethoxylates, glycerol, Carbowax, butyl diglycerol ether or mixtures thereof

A further aspect of the invention concerns a method of cleaning textile fabrics using a packaged product according to any of the previous claims comprising the steps of :
(i) dispensing the foaming detergent composition from the container in the form of a foam having a bulk density less than 250 g/l on to textile fabrics, and
(ii) distributing the foam, either by mechanical agitation, or by hand, over the textile fabrics
(iii) removing the foam residue from the cleaned textile fabrics.

Where water is used to presoak or rinse, or presoak and rinse, the textile fabrics, it is preferred that the weight ratio of water to dry fabric is less than 1:1.

### Detailed Disclosure of the Invention

Textile fabrics are any materials made from cloth, including garments such as shirts, blouses, socks, skirts, trousers, jackets, underwear and also including tablecloths, towels, curtains. The definition of textile fabrics as used herein does not include carpets and similar floor coverings.

Textile fabrics which are to be used in the present invention are commonly made by weaving or knitting. Many different fibres may be used to produce woven, knitted or other types of textile fabric including synthetic fibres (such as polyester, polyamide.) and natural fibres from plants (such as cotton, hemp) and from animals (such as wool, angora, silk). Blends of different fibres are also commonly used.

Foam is a coarse dispersion of gas in a relatively small amount of liquid. The foams of the present invention are a continuous liquid phase comprising a detergent composition, and a dispersed phase comprising a gas. Typically, the gas "bubbles" of the dispersed phase can vary in size from 50 micrometers to several millimetres.

In general, the quality of the foam is determined by assessing various foam quality attributes, such as: 1) the appearance of the foam as it is determined by the uniformity of the bubble size distribution, as well as by the actual bubble sizes, wherein small and uniformly sized bubbles are generally preferred; 2) the thickness of the foam as it is determined by the apparent foam viscosity, wherein a greater apparent foam viscosity is generally preferred; 3) the density of the foam which is preferably less than 250g/l, more preferably less than 150 g/l, and most preferably less than 100 g/l; and 4) the drainage of the liquid from the foam upon standing on a solid surface, wherein slow drainage of the liquid is generally preferred.

Preferred components of the detergent foam will now be described in more detail.

Water-soluble salts of the higher fatty acids, i.e., "soaps", are useful anionic surfactants in the compositions herein. This includes alkali metal soaps such as the sodium, potassium, ethanolamine, ammonium, and alkylammonium salts of higher fatty acids containing from 8 to 24 carbon atoms, and preferably from 12 to 18 carbon atoms. Soaps can be made by direct saponification of fats and oils or by the neutralization of free fatty acids. Particularly useful are the salts of the mixtures of fatty acids derived from coconut oil and tallow, i.e., tallow and coconut soap.

Useful anionic surfactants also include the water-soluble salts, preferably the alkali metal, ethanolamine, ammonium and alkylolammonium salts, of organic sulfuric reaction products having in their molecular structure an alkyl group containing from 10 to 20 carbon atoms and a sulfonic acid or sulfuric acid ester group. (Included in the term "alkyl" is the alkyl portion of acyl groups.) Examples of this group of synthetic surfactants are the alkyl sulfates, especially those obtained by sulfating the higher alcohols (C₈-C₁₈ carbon atoms) such as those produced by reducing the glycerides of tallow or coconut oil; and the alkyl benzene sulfonates in which the alkyl group contains from 9 to 15 carbon atoms, in straight or branched chain configuration, e.g., those of the type described in U.S. Pat. Nos. 2,220,099 and 2,477,383; and methyl ester sulphonates. Especially valuable are linear straight chain alkyl benzene sulfonates in which the average number of carbon atoms in the alkyl group is from 11 to 13, abbreviated as C₁₁-C₁₃ LAS.

Other anionic surfactants herein are the alkyl glyceryl ether sulfonates, especially those ethers of higher alcohols derived from tallow and coconut oil; coconut oil fatty acid monoglyceride sulfonates and sulfates; salts of alkyl phenol ethylene oxide ether sulfates containing from 1 to 10 units of ethylene oxide per molecule and wherein the alkyl groups contain from 8 to 12 carbon atoms; and salts of alkyl ethylene oxide ether sulfates containing from 1 to 10 units of ethylene oxide per molecule and wherein the alkyl group contains from 10 to 20 carbon atoms.

Other useful anionic surfactants herein include the water-soluble salts of esters of alpha-sulfonated fatty acids containing from 6 to 20 carbon atoms in the fatty acid group and from 1 to 10 carbon atoms in the ester group; water-soluble salts of 2-acyloxy-alkane-1-sulfonic acids containing from 2 to 9 carbon atoms in the acyl group and from 9 to 23 carbon atoms in the alkane moiety; alkyl ether sulfates containing from 10 to 20 carbon atoms in the alkyl group and from 1 to 30 moles of ethylene oxide; watersoluble salts of olefin sulfonates containing from 12 to 24 carbon atoms; and beta-alkyloxy alkane sulfonates containing from 1 to 3 carbon atoms in the alkyl group and from 8 to 20 carbon atoms in the alkane moiety.

Water-soluble nonionic surfactants are also useful as surfactants in the compositions of the invention. Indeed, preferred processes use anionic/nonionic blends. Such nonionic materials include compounds produced by the condensation of alkylene oxide groups (hydrophilic in nature) with an organic hydrophobic compound, which may be aliphatic or alkyl aromatic in nature. The length of the polyoxyalkylene group which is condensed with any particular hydrophobic group can be readily adjusted to yield a water-soluble compound having the desired degree of balance between hydrophilic and hydrophobic elements.

Suitable nonionic surfactants include the polyethylene oxide condensates of alkyl phenols, e.g., the condensation products of alkyl phenols having an alkyl group containing from 6 to 16 carbon atoms, in either a straight chain or branched chain configuration, with from 4 to 25 moles of ethylene oxide per mole of alkyl phenol.

Preferred nonionics are the water-soluble condensation products of aliphatic alcohols containing from 8 to 22 carbon atoms, in either straight chain or branched configuration, with from 1 to 25 moles of ethylene oxide per mole of alcohol, especially 2 to 7 moles of ethylene oxide per mole of alcohol. Particularly preferred are the condensation products of alcohols having an alkyl group containing from 9 to 15 carbon atoms; and condensation products of propylene glycol with ethylene oxide.

Other preferred nonionics are polyhydroxy fatty acid amides which may be prepared by reacting a fatty acid ester and an N-alkyl polyhydroxy amine. The preferred amine for use in the present invention is N-(R1)-CH2(CH2OH)4-CH2-OH and the preferred ester is a C12-C20 fatty acid methyl ester. Most preferred is the reaction product of N-methyl glucamine (which may be derived from glucose) with C12-C20 fatty acid methyl ester.

Methods of manufacturing polyhydroxy fatty acid amides have been described in WO 9206073, published on 16th April, 1992. This application describes the preparation of polyhydroxy fatty acid amides in the presence of solvents. In a highly preferred embodiment of the invention N-methyl glucamine is reacted with a C12-C20 methyl ester.

Other surfactants that may be used in the compositions of the present invention include C10-C18 glycerol ethers, C10-18 alkyl polyglycoside and their corresponding sulphated polyglycosides, alkyl ester sulphonates, and oleoyl sarcosinate.

Semi-polar nonionic surfactants include water-soluble amine oxides containing one alkyl moiety of from 10 to 18 carbon atoms and 2 moieties selected from the group consisting of alkyl groups and hydroxyalkyl groups containing from 1 to 3 carbon atoms; water-soluble phosphine oxides containing one alkyl moiety of 10 to 18 carbon atoms and 2 moieties selected from the group consisting of alkyl groups and hydroxyalkyl groups containing from 1 to 3 carbon atoms; and water-soluble sulfoxides containing one alkyl moiety of from 10 to 18 carbon atoms and a moiety selected from the group consisting of alkyl and hydroxyalkyl moieties of from 1 to 3 carbon atoms.

Ampholytic surfactants include derivatives of aliphatic or aliphatic derivatives of heterocyclic secondary and tertiary amines in which the aliphatic moiety can be either straight or branched chain and wherein one of the aliphatic substituents contains from 8 to 18 carbon atoms and at least one aliphatic substituent contains an anionic water-solubilizing group.

Zwitterionic surfactants include derivatives of aliphatic quaternary ammonium phosphonium, and sulfonium compounds in which one of the aliphatic substituents contains from 8 to 18 carbon atoms.

Useful cationic surfactants include water-soluble quaternary ammonium compounds of the form R₄R₅R₆R₇N⁺X⁻, wherein R₄ is alkyl having from 10 to 20, preferably from 12-18 carbon atoms, and R₅, R₆ and R₇ are each C₁ to C₇ alkyl preferably methyl; X⁻ is an anion, e.g. chloride. Examples of such trimethyl ammonium compounds include C₁₂₋₁₄ alkyl trimethyl ammonium chloride and cocalkyl trimethyl ammonium methosulfate.

The foam of the present invention can contain neutral or alkaline salts which have a pH in solution of seven or greater, and can be either organic or inorganic in nature.

The builder salt assists in providing the desired density and bulk to the detergent granules herein. While some of the salts are inert, many of them also function as detergency builder materials in the laundering solution.

Examples of neutral water-soluble salts include the alkali metal, ethanolamine, ammonium or substituted ammonium chlorides, fluorides and sulfates. The sodium, ethanolamine and ammonium salts of the above are preferred. Citric acid and, in general, any other organic or inorganic acid may be incorporated into the present invention.

Other useful water-soluble salts include the compounds commonly known as detergent builder materials. Builders are generally selected from the various water-soluble, alkali metal, ethanolamine, ammonium or substituted ammonium phosphates, polyphosphates, phosphonates, polyphosphonates, carbonates, silicates, borates, and polyhyroxysulfonates. Preferred are the sodium, ethanolamine and ammonium salts of the above.

Specific examples of inorganic phosphate builders are sodium and potassium tripolyphosphate, pyrophosphate, polymeric metaphosphate having a degree of polymerization of from 6 to 21, and orthophosphate. Examples of polyphosphonate builders are the salts of ethylene diphosphonic acid, the salts of ethane 1-hydroxy-1,1-diphosphonic acid and the salts of ethane, 1,1,2-triphosphonic acid. Other phosphorus builder compounds are disclosed in U.S. Pat. Nos. 3,159,581; 3,213,030; 3,422,021; 3,422,137; 3,400,176 and 3,400,148, incorporated herein by reference. In general, however, phosphates are preferably avoided for environmental reasons.

Examples of nonphosphorus, inorganic builders are sodium and potassium carbonate, bicarbonate, sesquicarbonate, tetraborate decahydrate, and silicate having a molar ratio of SiO₂ to alkali metal oxide of from 0.5 to 4.0, preferably from 1.0 to 2.4.

Enzymes - Enzymes can be included in the formulations herein for a wide variety of fabric laundering purposes, including removal of protein-based, carbohydrate-based, or triglyceride-based stains, for example, and for the prevention of refugee dye transfer, and for fabric restoration. The enzymes to be incorporated include proteases, amylases, lipases, cellulases, and peroxidases, as well as mixtures thereof. Other types of enzymes may also be included. They may be of any suitable origin, such as vegetable, animal, bacterial, fungal and yeast origin. However, their choice is governed by several factors such as pH-activity and/or stability optima, thermostability, stability versus active detergents and builders. In this respect bacterial or fungal enzymes are preferred, such as bacterial amylases and proteases, and fungal cellulases.

Enzymes are normally incorporated at levels sufficient to provide up to 5 mg by weight, more typically 0.01 mg to 3 mg, of active enzyme per gram of the composition. Stated otherwise, the compositions herein will typically comprise from 0.001% to 5%, preferably 0.01%-1% by weight of a commercial enzyme preparation. Protease enzymes are usually present in such commercial preparations at levels sufficient to provide from 0.005 to 0.1 Anson units (AU) of activity per gram of composition.

Suitable examples of proteases are the subtilisins which are obtained from particular strains of B. subtilis and B. licheniforms. Another suitable protease is obtained from a strain of Bacillus, having maximum activity throughout the pH range of 8-12, developed and sold by Novo Industries A/S under the registered trade name ESPERASE. The preparation of this enzyme and analogous enzymes is described in British Patent Specification No. 1,243,784 of Novo. Proteolytic enzymes suitable for removing protein-based stains that are commercially available include those sold under the tradenames ALCALASE and SAVINASE by Novo Industries A/S (Denmark) and MAXATASE by International Bio-Synthetics, Inc. (The Netherlands) . Other proteases include Protease A (see European Patent Application 130,756, published January 9, 1985) and Protease B (see European Patent Application Serial No. 87303761.8, filed April 28, 1987, and European Patent Application 130,756, Bott et al, published January 9, 1985).

Amylases include, for example, α-amylases described in British Patent Specification No. 1,296,839 (Novo), RAPIDASE, International Bio-Synthetics, Inc. and TERMAMYL, Novo Industries.

The cellulase usable in the present invention include both bacterial or fungal cellulase. Preferably, they will have a pH optimum of between 5 and 9.5. Suitable cellulases are disclosed in U.S. Patent 4,435,307, Barbesgoard et al, issued March 6, 1984, which discloses fungal cellulase produced from Humicola insolens and Humicola strain DSM1800 or a cellulase 212-producing fungus belonging to the genus Aeromonas, and cellulase extracted from the hepatopancreas of a marine mollusk (Dolabella Auricula Solander). suitable cellulases are also disclosed in GB-A-2.075.028; GB-A-2.095.275 and DE-OS-2.247.832. CAREZYME (Novo) is especially useful.

Suitable lipase enzymes for detergent usage include those produced by microorganisms of the Pseudomonas group, such as Pseudomonas stutzeri ATCC 19.154, as disclosed in British Patent 1,372,034. See also lipases in Japanese Patent Application 53,20487, laid open to public inspection on February 24, 1978. This lipase is available from Amano Pharmaceutical Co. Ltd., Nagoya, Japan, under the trade name Lipase P "Amano," hereinafter referred to as "Amano-P." Other commercial lipases include Amano-CES, lipases ex Chromobacter viscosum, e.g. Chromobacter viscosum var. lipolyticum NRRLB 3673, commercially available from Toyo Jozo Co., Tagata, Japan; and further Chromobacter viscosum lipases from U.S. Biochemical Corp., U.S.A. and Disoynth Co., The Netherlands, and lipases ex Pseudomonas gladioli. The LIPOLASE enzyme derived from Humicola lanuginosa and commercially available from Novo (see also EPO 341,947) is a preferred lipase for use herein.

Peroxidase enzymes are used in combination with oxygen sources, e.g., percarbonate, perborate, persulfate, hydrogen peroxide, etc. They are used for "solution bleaching," i.e. to prevent transfer of dyes or pigments removed from substrates during wash operations to other substrates in the wash solution. Peroxidase enzymes are known in the art, and include, for example, horseradish peroxidase, ligninase, and haloperoxidase such as chloro- and bromo-peroxidase. Peroxidase-containing detergent compositions are disclosed, for example, in PCT International Application WO 89/099813, published October 19, 1989, by O. Kirk, assigned to Novo Industries A/S.

A wide range of enzyme materials and means for their incorporation into synthetic detergent compositions are also disclosed in U.S. Patent 3,553,139, issued January 5, 1971 to McCarty et al. Enzymes are further disclosed in U.S. Patent 4,101,457, Place et al, issued July 18, 1978, and in U.S. Patent 4,507,219, Hughes, issued March 26, 1985, both. Enzyme materials useful for liquid detergent formulations, and their incorporation into such formulations, are disclosed in U.S. Patent 4,261,868, Hora et al, issued April 14, 1981. Enzymes for use in detergents can be stabilized by various techniques. Enzyme stabilization techniques are disclosed and exemplified in U.S. Patent 3,600,319, issued August 17, 1971 to Gedge, et al, and European Patent Application Publication No. 0 199 405, Application No. 86200586.5, published October 29, 1986, Venegas. Enzyme stabilization systems are also described, for example, in U.S. Patent 3,519,570.

It is important to distinguish between the foam of the present invention and the suds which are commonly encountered in everyday washing process. The foam of the present invention is much more concentrated and comprises less water than conventional suds. Foam comprises less than 90%, preferably less than 75%, more preferably less than 50%, even more preferably less than 30%, and most preferably less than 15% by weight of water. The foam of the present invention comprises at least 18% by weight, and preferably at least 25% by weight of a surface active agent. Most preferred foams for use as cleaning compositions comprise at least 10% by weight, preferably at least 20% by weight of anionic surfactant.

On the other hand, suds, which are formed in conventional washing process when detergents are diluted prior to washing, are formed from quite dilute solutions typically 100g of product in 10 litres of water. The result is a wash liquor which comprises 99% by weight of water. A layer of suds may form on the surface of the wash liquor, the composition of the suds being similar to that of the wash liquor itself. The surfactant content of the suds will normally be much less than 1%, typically less than 0.3%. Consequently the difference between the foam of the present invention and the suds of a conventional washing process will be understood.

It will also be recognised by the man skilled in the art that suds are often considered undesirable in the washing process and antisuds agents are often employed to reduce or control them. In a washing process in which the solution of detergent active agents is the medium of transport of the actives to the fibre surface, the presence of suds can diminish washing performance. This is because the detergent actives which are in the suds are no longer dissolved in the washing liquor itself, and are not therefore efficiently transported to the fibre surface.

The packaged product of the present invention comprises a sealed container, such as an essentially cylindrical bottle, having a dispensing means such as a nozzle. The container contains the detergent composition and carbon dioxide propellant gas. Suitable containers may be made from any material, especially aluminium, tin-plate, plastics including PET, OPP, PE or polyamide and including mixtures, laminates or other combinations of these. Foam is dispensed when the nozzle is activated and the detergent is released together with the carbon dioxide. The carbon dioxide expands to form many "bubbles" within the detergent composition thereby creating the foam.

Various ways to pressurise the propellant gas are known in the art. For example the gas may be pressurised at the time of packing. The product may be physically separated from a compressed gas by a membrane such as rubber under tension. Alternatively a means for pressurising the gas subsequently by mechanical action may be provided (so-called "pump and spray" systems).

Various apparatus for delivering foams are described in US-A 5 364 031 issued on 15th November 1994 entitled "Foam Dispensing Nozzles and Dispensers Employing Said Nozzles".

Any nozzle or nozzle / valve assembly which provides a means for releasing the mixture of detergent ingredients from the container and provides a foam is suitable for use in the present invention. The Precision Valve Company (Valve Précision in France) supplies a range of nozzle assemblies for various applications including shaving foams and carpet cleaners under various trade names including City®, Montego®, Power Jet®, Vulcan® and Visco®. Nozzles which disperse the foam both horizontally and vertically (when the container is held upright) are available. Metering nozzles which dispense a predetermined amount of foam are also available and useful in the present invention. Metering valves are disclosed in WO9108965 (Precision Valve Co) and EP-A 616953 (3M Co). In order for the apparatus to be effective in the method of the present invention it should deliver the foam at a rate of at least 3g per second of foam from the sealed container, more preferably at a rate of at least 10 g per second.

### Methods of Cleaning

### Handwash

The method of the present invention may be used to wash textile fabrics by hand (referred to herein as "handwash"). The foam is dispensed onto or around the textile fabrics to be washed, and then the foam is thoroughly distributed over the textile fabrics, if necessary, by agitating the textile fabrics and foam by hand. It is believed that the high surface area of the foam enables the active ingredients to be well-distributed over the surface of the textile fabrics. Furthermore it is believed that the intimate proximity of the active, non-diluted foam to the textile fabrics promotes excellent cleaning.

The textile fabrics may be left to soak in the foam for anything up to several days, or even weeks. However it is preferred that the soaking time is between 1 minute and 24 hours, preferably between 5 minutes and 4 hours.

If desired any foam residue may subsequently be removed from the textile fabrics. For example the residue may be rinsed out using clean water or it may be removed from the textile fabrics by applying a vacuum.

The method of the present invention is particularly well-suited to hand washing of delicate textile fabrics. In particular textile fabrics comprising high levels of wool or silk may be advantageously treated in this way. One particular benefit is a marked reduction in local fabric damage which may occur when conventional laundry processes are used. In conventional laundry processes the detergent composition, the soiled textile fabrics and water are all brought together in a suitable container. At the beginning of the process there are very high local concentrations of active ingredients as they begin to dissolve in the water, but before they have been homogeneously distributed in the water. Such high local concentrations in solution, if they happen to be present on or close to the fabric can cause local fabric damage. This is especially true in the case of high local concentrations of bleaching agents and optical brighteners in solution. This type of local fabric damage is avoided according to the method of the present invention. Because all of the active ingredients are uniformly distributed throughout the large volume of the foam there are no local concentrations of active materials which might cause fabric damage.

A typical handwash composition will comprise some or all of the following components : surfactants (anionic, nonionic, cationic, amphoteric, zwitterionic), detergent builders and chelating agents, soil release polymers, optical brightener, dye transfer inhibition polymer, perfume, enzymes, colorants.

Surfactants are preferably present at a level of from 18% to 90% by weight of the composition, preferably 20% to 80% of the composition, more preferably from 25% to 50% of the composition and most preferably 30% by weight of the composition.

Detergent builders such as fatty acids, citric acid, succinic acid, phosphate, zeolite are preferably present at a level of from 10% to 90% by weight of the composition, preferably 10% to 50% of the composition, more preferably from 12% to 20% by weight of the composition.
Chelating agent such as phosphonate are preferably present at a level of from 0% to 5%, more preferably from 0.1% to 3% by weight of the composition.

### Machine wash

The method of the present invention may be used to wash textile fabrics in a conventional washing machine or, alternatively, if no added water is required, in a conventional drying machine (both cases referred to herein as "machine wash"). The foam of the present invention is simply dispensed into the drum of the machine either before or after the soiled textile fabrics have been loaded.

Most commercially available washing machines have automatic washing cycles, and many of these cycles start by the addition of water into the machine drum. However, to fall within the scope of the present invention it is necessary for the concentrated foam to be thoroughly dispersed over the textile fabrics without being dissolved in solution. Preferably this is achieved using a washing machine with a washing cycle in which the drum is rotated several times (thereby distributing the foam) before any water is added. However, this does not exclude the step of presoaking the textile fabrics prior to the treatment with the foam from the present invention.

If water is added at a later part of the cycle most of the foam components will be dissolved or dispersed in the water, probably resulting in a layer of suds in the machine. As noted above, these suds which have a high water content and a low surfactant content should not be considered as foam within the meaning of the present invention.

The wash cycle may be completed by any combination of washing, rinsing, conditioning and/or drying steps, during any one of which additional wash or rinse additives may be introduced into the machine drum.

The compositions suitable for machine wash foams are similar to those described above for handwash foams.

### Test Methods

### A. Foam Density

A glass beaker, 62mm internal height, 111mm internal diameter, is degreased with a standard soap solution and well rinsed with distilled water. The beaker is filled with foam until overflowing, excess foam being immediately scraped off using a straight edge wiped across the top edge of the beaker. The difference in weight of the full beaker (W2) minus the empty beaker (W1) is the weight of foam. The volume of the beaker (V) is known. Foam density is calculated by (W2-W1)/V.

### B. Foam Stability in Air

A glass beaker, 62mm internal height, 111mm internal diameter, is degreased with a standard soap solution and well rinsed with distilled water. The beaker is filled with foam until overflowing, excess foam being immediately scraped off using a straight edge wiped across the top edge of the beaker.
The time taken for the foam to collapse to half the total volume of the glass beaker is an indication of the foam stability in air. In this test the time taken for the foam to collapse to half the height of the glass beaker is measured and recorded.

### Examples

Liquid laundry compositions were prepared by mixing the components according to the compositions in Table 1. Then each composition was packed into metal containers, each container having a nominal capacity of 405 cubic centimetres. The cans were filled with 250 ml of liquid detergent and then were pressurised with carbon dioxide while shaking, until it equilibrates to a can pressure of about 10 bars of carbon dioxide at about 20 °C.

All the cans are fitted with a 3 x 1.0 mm diameter standard valve (Code No. 045380 supplied by Valve Precision), without a dip tube and a straight whipped cream nozzle. In order to expel the foam out of the can, the can must be in an inverted position.

The cans were allowed to rest for a day at room temperature (about 20 °C) before the testing for the foam characteristics is performed. Immediately before the testing is done, the cans were thoroughly shaken by hand to ensure homogeneity of the components inside the can. All foam densities and stabilities were measured based upon the first discharge of foam from the filled aerosol container.

The results of the methods described above are shown in Table 2.

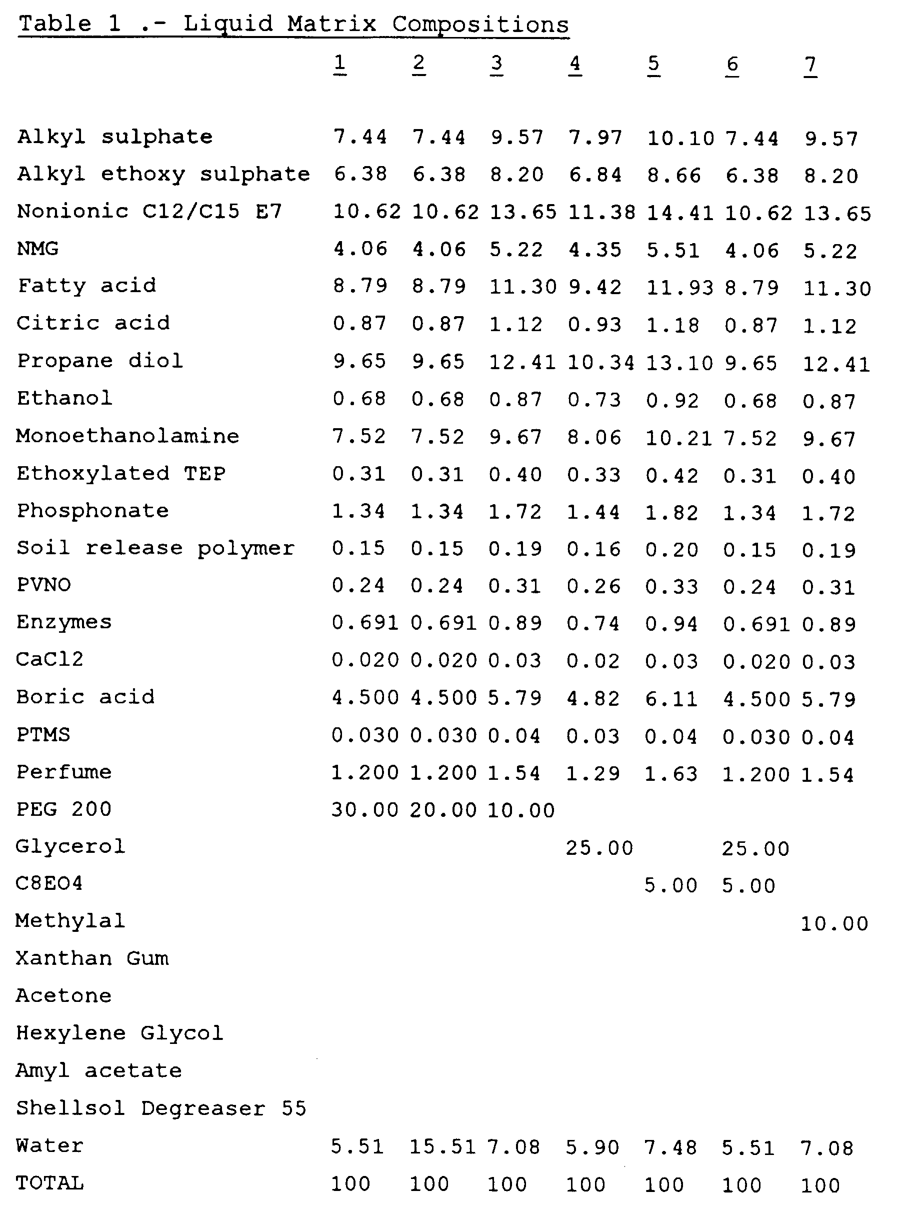

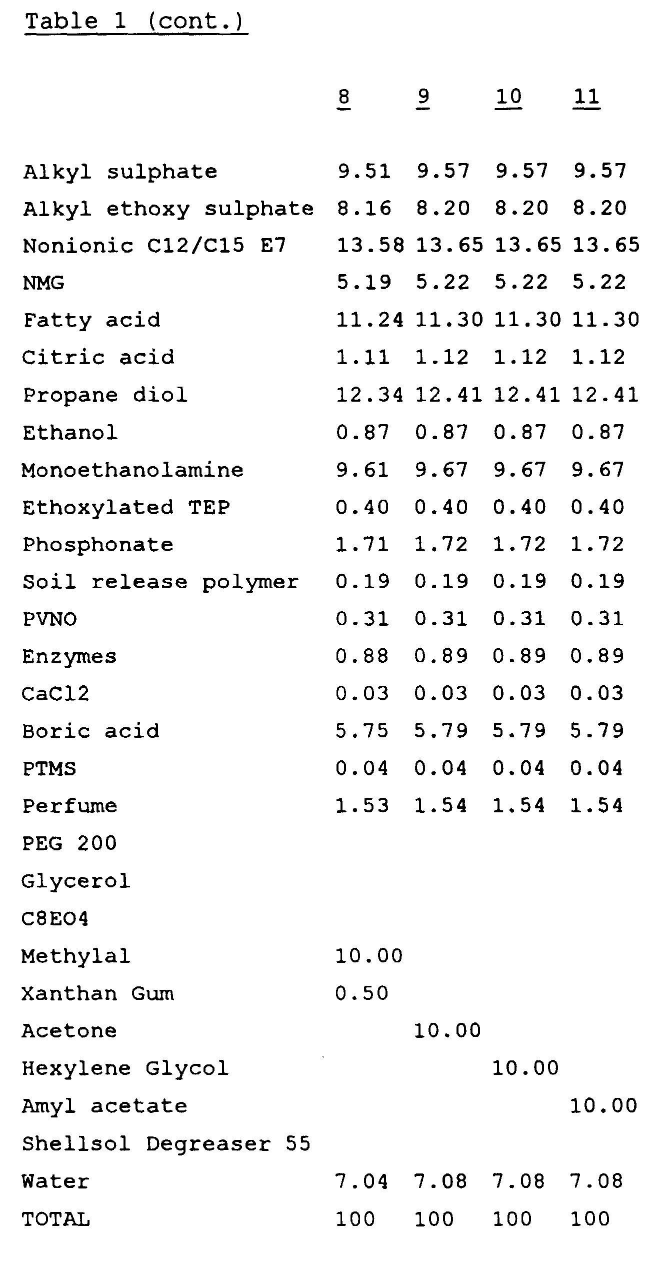

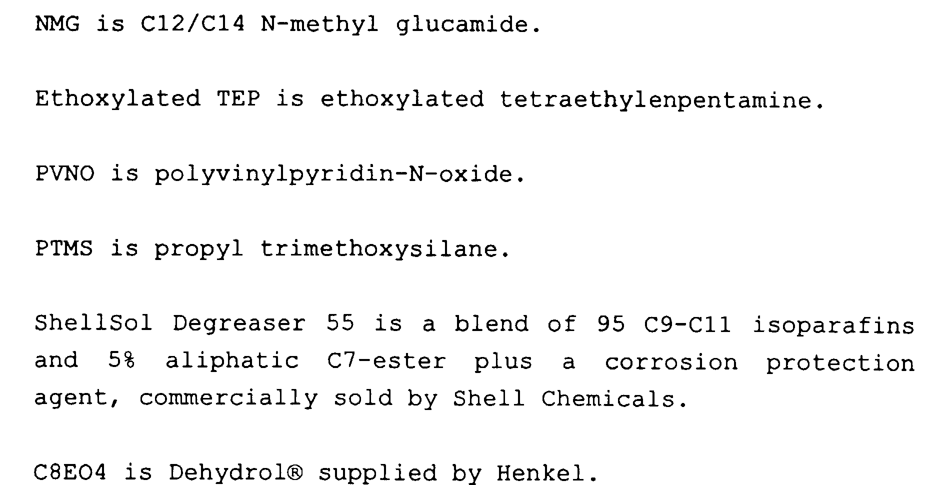

**Table 2.-**

| Summary of Results | | | | | | | |
|---|---|---|---|---|---|---|---|
| | 1 | 2 | 3 | 4 | 5 | 6 | 7 |
| Liquid Matrix | | | | | | | |
| Surfactant (%) | 36.44 | 36.44 | 43.42 | 38.19 | 45.17 | 36.44 | 43.42 |
| Water (%) | 5.51 | 15.51 | 7.08 | 5.90 | 7.48 | 5.51 | 7.08 |
| Viscosity (mPa.s) | 264 | 180 | 451 | 610 | 470 | 450 | 175 |
| | | | | | | | |

| Foam properties | | | | | | | |
|---|---|---|---|---|---|---|---|
| Density (g/L) | 78 | 95 | 100 | 107 | 80 | 108 | 66 |
| Stability (min) | 8.0 | 11.0 | n.a. | 18.0 | 11.0 | 9.0 | 1.7 |
| Empty Can | Yes | Yes | Yes | Yes | Yes | Yes | Yes |
| | | | | | | | |

| | 8 | 9 | 10 | 11 | A | B | C |
|---|---|---|---|---|---|---|---|
| Liquid Matrix | | | | | | | |
| Surfactant (%) | 43.25 | 43.42 | 43.42 | 43.42 | 46.91 | 43.42 | 36.44 |
| Water (%) | 7.04 | 7.08 | 7.08 | 7.08 | 7.87 | 7.08 | 5.51 |
| Viscosity (mPa.s) | 260 | 114 | 234 | 224 | 885 | 940 | 1700 |
| | | | | | | | |

| Foam properties | | | | | | | |
|---|---|---|---|---|---|---|---|
| Density (g/L) | 78 | 70 | 78 | 78 | 91 | 85 | 266 |
| Stability (min) | 10.0 | 1.2 | 5.0 | 2.5 | n.a. | > 30 | > 30 |
| Empty Can | Yes | Yes | Yes | Yes | No | No | No |

## Claims

1. A packaged product comprising
(i) a foaming detergent composition;
(ii) propellant gas; and
(iii) a container having a dispensing means;
the foaming detergent composition and the propellant gas being packaged inside the container,
characterised in that the foaming detergent composition comprises at least 18% by weight of a surfactant system, the surfactant system consisting essentially of anionic surfactant and, optionally, nonionic surfactant and that the propellant gas consists essentially of carbon dioxide.

2. A packaged product according to claim 1 wherein the foaming detergent composition comprises less than 25% by weight of water.

3. A packaged product according to claim 2 wherein the foaming detergent composition comprises less than 15% by weight of water.

4. A packaged product according to either of claims 2 or 3 wherein the foaming detergent composition further comprises enzymes.

5. A packaged product according to any of claims 1 to 4 wherein the viscosity of the foaming detergent composition, measured at 20°C and 1 atmosphere, using a Brookfield viscometer, Spindle No.2 at 60rpm, is less than 700 mPa.s.

6. A packaged product according to claim 5 wherein the foaming detergent composition further comprises a viscosity reducing, organic solvent.

7. A packaged product according to claim 6 wherein the viscosity reducing, organic solvent is selected from the group consisting of preferably polyethylene glycol, short chain ethoxylates, glycerol, Carbowax, butyl diglycerol ether or mixtures thereof

8. A method of cleaning textile fabrics using a packaged product according to any of the previous claims comprising the steps of :
(i) dispensing the foaming detergent composition from the container in the form of a foam having a bulk density less than 250 g/l on to textile fabrics, and
(ii) distributing the foam, either by mechanical agitation, or by hand, over the textile fabrics
(iii) removing the foam residue from the cleaned textile fabrics.

9. A method of cleaning textile fabrics according to claim 8 whereby water is used to presoak or rinse, or presoak and rinse, the textile fabrics, wherein the weight ratio of water to dry fabric is less than 1:1.

## Patentansprüche

1. Abgepacktes Produkt, umfassend
(i) eine schäumende Reinigungsmittelzusammensetzung;
(ii) Treibmittelgas; und
(iii) einen Behälter mit einer Spendereinrichtung;
wobei die schäumende Reinigungsmittelzusammensetzung und das Treibmittelgas innerhalb des Behälters gepackt sind, dadurch gekennzeichnet, daß die schäumende Reinigungsmittelzusammensetzung mindestens 18 Gew.-% eines Tensidsystems umfaßt, wobei das Tensidsystem im wesentlichen aus anionischem Tensid und wahlweise nichtionischem Tensid besteht, und daß das Treibmittelgas im wesentlichen aus Kohlenstoffdioxid besteht.

2. Abgepacktes Produkt nach Anspruch 1, wobei die schäumende Reinigungsmittelzusammensetzung weniger als 25 Gew.-% Wasser umfaßt.

3. Abgepacktes Produkt nach Anspruch 2. wobei die schäumende Reinigungsmittelzusammensetzung weniger als 15 Gew.-% Wasser umfaßt.

4. Abgepacktes Produkt nach Anspruch 2 oder 3, wobei die schäumende Reinigungsmittelzusammensetzung weiterhin Enzyme umfaßt.

5. Abgepacktes Produkt nach mindestens einem der Ansprüche 1-4, wobei die Viskosität der schäumenden Reinigungsmittelzusammensetzung, gemessen bei 20°C und 1 Atmosphäre, unter Verwendung eines Brookfield-Viscosimeters, Spindel Nr. 2 bei 60 U/min. weniger als 700 mPa·s beträgt.

6. Abgepacktes Produkt nach Anspruch 5, wobei die schäumende Reinigungsmittelzusammensetzung weiterhin ein die Viskosität reduzierendes, organisches Lösungsmittel umfaßt.

7. Abgepacktes Produkt nach Anspruch 6, wobei das die Viskosität reduzierende, organische Lösungsmittel aus der Gruppe gewählt ist, bestehend vorzugsweise aus Polyethylenglycol, kurzkettigen Ethoxylaten, Glycerin, Carbowachs, Butyldiglycerinether oder Mischungen hiervon.

8. Verfahren zum Reinigen von Textilstoffen unter Verwendung eines abgepackten Produkts nach mindestens einem der vorangehenden Ansprüche, umfassend die Schritte:
(i) Dispensieren der schäumenden Reinigungsmittelzusammensetzung aus dem Behälter in Form eines Schaums mit einer Schüttdichte von weniger als 250 g/l auf den Textilstoffen; und
(ii) Verteilen des Schaums, entweder durch mechanische Bewegung oder per Hand über den Textilstoffen;
(iii) Entfernen des Schaumrückstands von den gereinigten Textilstoffen.

9. Verfahren zum Reinigen von Textilstoffen nach Anspruch 8, wobei Wasser verwendet wird, um die Textilstoffe vorzutränken oder zu spülen oder vorzutränken und zu spülen, wobei das Gewichtsverhältnis von Wasser zu trockener Textilie weniger als 1:1 beträgt.

## Revendications

1. Produit sous emballage comprenant :
(i) une composition détergente moussante ;
(ii) un gaz propulseur ; et
(iii) un récipient ayant un moyen de pulvérisation;
la composition de détergent moussant et le gaz propulseur étant conditionnés à l'intérieur du récipient,
caractérisé en ce que la composition détergente moussante comprend au moins 18% en poids d'un système tensio-actif, le système tensio-actif étant essentiellement constitué d'un agent tensio-actif anionique et, facultativement, d'un agent tensio-actif non ionique, et en ce que le gaz propulseur consiste essentiellement en anhydride carbonique.

2. Produit sous emballage selon la revendication 1, dans lequel la composition détergente moussante comprend moins de 25% en poids d'eau.

3. Produit sous emballage selon la revendication 2, dans lequel la composition détergente moussante comprend moins de 15% en poids d'eau.

4. Produit sous emballage selon l'une quelconque des revendications 2 et 3, dans lequel la composition détergente moussante comprend en outre des enzymes.

5. Produit sous emballage selon l'une quelconque des revendications 1 à 4 dans lequel la viscosité de la composition détergente moussante, mesurée à 20°C et à 1 atmosphère, en utilisant un viscosimètre Brookfield, arbre N°2 à 60 tpm, est inférieure à 700 mPa.s.

6. Produit sous emballage selon la revendication 5, dans lequel la composition détergente moussante comprend en outre un solvant organique réducteur de viscosité.

7. Produit sous emballage selon la revendication 6, dans lequel le solvant organique réducteur de viscosité est choisi dans le groupe constitué par, de préférence, le polyéthylèneglycol, les éthoxylates à chaîne courte, le glycérol, le Carbowax, l'éther butylique de diglycérol ou leurs mélanges.

8. Procédé de nettoyage des tissus textiles utilisant un produit sous emballage selon l'une quelconque des revendications précédentes, comprenant les étapes de :
(i) pulvérisation de la composition détergente moussante à partir du récipient sous la forme d'une mousse ayant une densité apparente inférieure à 250 g/litre sur des tissus textiles, et
(ii) répartition de la mousse, soit par agitation mécanique, soit à la main, sur le tissu textile,
(iii) enlèvement du résidu de mousse du tissu textile nettoyé.

9. Procédé de nettoyage des tissus textiles selon la revendication 8 dans lequel on utilise de l'eau pour faire tremper ou rincer, ou faire tremper et rincer, les tissus textiles, dans lequel le rapport pondéral de l'eau au textile sec est inférieur à 1:1.
